# EUROPEAN PATENT APPLICATION

(11) **EP 4 579 447 A1**
(43) Date of publication of application: **02.07.2025**
(21) Application number: 23869745.2
(22) Date of filing: 16.06.2023
(51) Int. Cl.: G06F 9/44, G06F 12/14

(54) **DATA ACCESS METHOD AND APPARATUS**

(30) Priority: 30.09.2022 CN 202211213882
(71) Applicant: Huawei Technologies Co., Ltd., Shenzhen, Guangdong 518129 (CN)
(72) Inventor: ZHONG, Kan, Shenzhen, Guangdong 518129 (CN); CUI, Wenlin, Shenzhen, Guangdong 518129 (CN)
(74) Representative: Thun, Clemens
(86) International application number: PCT/CN2023/100809
(87) International publication number: WO 2024/066496

(57) **Abstract**

A data access method is provided, and includes: obtaining, in a running procedure of a target process, a first virtual address of target data in the target process, querying a first address mapping relationship table based on the first virtual address, to determine whether the target data is stored in a local cache; if the target data is stored in the local cache, querying the first address mapping relationship table based on the first virtual address, to obtain a physical address of the target data in the local cache; and obtaining the target data based on the physical address of the target data in the local cache. After a file in a distributed storage system is mapped by using distributed mmap in the distributed storage system, a distributed virtual address of the file in the distributed storage system is locally recorded. In the running procedure of the target process, if the local cache is not hit, remote DVA space is accessed based on a page fault, so that delay overheads of an end-to-end software stack are reduced.

## Description

This application claims priority to Chinese Patent Application No. 202211213882.0, filed with the China National Intellectual Property Administration on September 30, 2022 and entitled "DATA ACCESS METHOD AND APPARATUS", which is incorporated herein by reference in its entirety.

### TECHNICAL FIELD

The present invention relates to the field of computer technologies, and in particular, to a data access method and an apparatus.

### BACKGROUND

A conventional file access path is long. In a file access procedure, after a virtual file system (virtual file system, VFS), a file system client, and a file system server, a file in a persistent memory (persistent memory, PM) is finally accessed. In the entire access procedure, overheads of a software stack are large. The software stack is a set of programs or components needed for running an application.
mmap is a method for mapping a file to a memory. To be specific, a file or another object is mapped to address space of a process, and a one-to-one mapping relationship between an address of the file or the another object and a segment of a virtual address in the virtual address space of the process is established. According to the mmap, physical space occupied in the file access procedure can be reduced. However, the mmap is limited to implementing memory mapping for a file, an object, a block device, or the like in a single node, and does not have a cross-node mapping capability.

### SUMMARY

This application provides a data access method, an apparatus, a computer-readable storage medium, and a computer program product. For a distributed storage system, a global shared memory pool in the distributed storage system is constructed, and may also be referred to as a global memory pool. Then, a global data block is constructed based on the global memory pool, and the global data block is mapped to process address space of a client. Then, the client establishes a local cache configured to cache the global data block in a distributed system, and establishes mapping from a virtual address of a process to a buffer page based on a local page table of the client. In other words, in the distributed storage system, after a remote file is mapped by using distributed mmap, a DVA of the file is locally recorded. When the local cache is not hit, remote DVA space is accessed based on a page fault, so that delay overheads of an end-to-end software stack are reduced.

According to a first aspect, this application provides a data access method. The method includes: obtaining, in a running procedure of a target process, a first virtual address of target data in the target process; querying a first address mapping relationship table based on the first virtual address, to determine whether the target data is stored in a local cache, where the first address mapping relationship table includes a correspondence between a virtual address of data in a first data set in a process and a physical address of the data in the first data set in the local cache, and the data in the first data set is obtained from a distributed storage system in advance; if the target data is stored in the local cache, querying the first address mapping relationship table based on the first virtual address, to obtain a physical address of the target data in the local cache; and obtaining the target data based on the physical address of the target data in the local cache.

In other words, in the distributed storage system, a global memory pool is formed based on a distributed storage node, and a global data block in the distributed storage system may be constructed based on the global memory pool. A client processor may map a part of data in the global data block to virtual address space of the target process, and generate the first address mapping relationship table. In addition, the client processor establishes a buffer page similar to page cache in a local memory of a client, to cache the global data block, and establishes a mapping relationship between a local buffer page and a virtual address in the target process. Then, the client processor updates the first address mapping relationship table based on the mapping relationship. In the running procedure of the target process, the client processor determines, based on the first virtual address of the target data in the target process, whether the target data is stored in the buffer page of the local cache. When the target data is stored in the buffer page of the local cache, the client processor may directly read the target data from the buffer page of the local cache. In other words, in the distributed storage system, mapping between a virtual address of the global data block and the virtual address of the target process and mapping between a virtual address of a process and a buffer page are established, so that a client process can quickly access the global data block, to reduce delay overheads from the client to a storage node software stack.

In a possible implementation, the first address mapping relationship table further includes a correspondence between a virtual address of data in a second data set in the process and a virtual address of the data in the second data set in the distributed storage system. The method further includes: if the target data is not stored in the local cache, querying the first address mapping relationship table based on the first virtual address, to obtain a second virtual address of the target data in the distributed storage system; querying a second address mapping relationship table based on the second virtual address, to obtain a physical address of the target data in the distributed storage system, where the second address mapping relationship table includes a correspondence between a virtual address of data in a third data set stored in the distributed storage system and a physical address of the data in the third data set in the distributed storage system, and the data in the third data set includes the data in the first data set and the data in the second data set; and obtaining the target data from the distributed storage system based on the physical address of the target data in the distributed storage system.

In other words, when the target data is not cached in the local cache, the client processor needs to read the target data from a storage node in the distributed storage system to the buffer page. Specifically, the client processor may query the first address mapping relationship table based on the first virtual address of the target data, to obtain a global virtual address, namely, the second virtual address, of the target data in the distributed storage system. Then, the client processor may query a second virtual address table in the distributed storage system based on the second virtual address, to obtain the physical address of the target data in the distributed storage system, and obtain the target data from the distributed storage system based on the physical address. The second virtual address table is an address mapping table obtained when the distributed storage system constructs global data.

In a possible implementation, after the obtaining the target data from the distributed storage system based on the physical address of the target data in the distributed storage system, the method further includes: storing the target data in the local cache; establishing a first correspondence between the first virtual address of the target data in the target process and the physical address of the target data in the local cache; and replacing a second correspondence in the first address mapping relationship table with the first correspondence, where the second correspondence is a correspondence between a virtual address of the target data in the target process and a virtual address of the target data in the distributed storage system.

In other words, after obtaining the target data from the distributed storage system, the client processor further needs to cache the target data in the local cache, and establish a mapping relationship between the physical address of the target data in the local cache and the virtual address of the target data in the target process. Then, the client processor stores the mapping relationship in the first address mapping relationship table. In this case, when the target process needs to obtain the target data again, the target process may directly obtain the target data from the local cache. This reduces delay overheads of obtaining the target data by the target process.

In a possible implementation, the method further includes: obtaining, in the running procedure of the target process, a third virtual address of to-be-written data in the target process; querying the first address mapping relationship table based on the third virtual address, to determine whether data corresponding to the third virtual address is stored in the local cache; and if the data corresponding to the third virtual address is stored in the local cache, replacing the data corresponding to the third virtual address in the local cache with the to-be-written data.

In other words, when the client process needs to write data into the storage node in the distributed storage system, the client process may directly cache the data that needs to be written in the buffer page of the client. Then, the client processor may mark the buffer page storing the data written by the client process as a dirty page, and periodically write the dirty page back to the storage node. This simplifies a process in which the client process performs writing into the storage node.

According to a second aspect, this application provides a data processing apparatus, including:
an obtaining module, configured to obtain, in a running procedure of a target process, a first virtual address of target data in the target process; and
a processing module, configured to query a first address mapping relationship table based on the first virtual address, to determine whether the target data is stored in a local cache, where the first address mapping relationship table includes a correspondence between a virtual address of data in a first data set in a process and a physical address of the data in the first data set in the local cache, and the data in the first data set is obtained from a distributed storage system in advance; and if the target data is stored in the local cache, query the first address mapping relationship table based on the first virtual address, to obtain a physical address of the target data in the local cache.

The obtaining module is further configured to obtain the target data based on the physical address of the target data in the local cache.

In a possible implementation, the first address mapping relationship table further includes a correspondence between a virtual address of data in a second data set in the process and a virtual address of the data in the second data set in the distributed storage system. The processing module is further configured to:
if the target data is not stored in the local cache, query the first address mapping relationship table based on the first virtual address, to obtain a second virtual address of the target data in the distributed storage system; and query a second address mapping relationship table based on the second virtual address, to obtain a physical address of the target data in the distributed storage system. The second address mapping relationship table includes a correspondence between a virtual address of data in a third data set stored in the distributed storage system and a physical address of the data in the third data set in the distributed storage system. The data in the third data set includes the data in the first data set and the data in the second data set.

The obtaining module is further configured to obtain the target data from the distributed storage system based on the physical address of the target data in the distributed storage system.

In a possible implementation, the processing module is further configured to:
store the target data in the local cache;
establish a first correspondence between the first virtual address of the target data in the target process and the physical address of the target data in the local cache; and
replace a second correspondence in the first address mapping relationship table with the first correspondence, where the second correspondence is a correspondence between a virtual address of the target data in the target process and a virtual address of the target data in the distributed storage system.

In a possible implementation, the obtaining module is further configured to obtain, in the running procedure of the target process, a third virtual address of to-be-written data in the target process.

The processing module is further configured to query the first address mapping relationship table based on the third virtual address, to determine whether data corresponding to the third virtual address is stored in the local cache; and if the data corresponding to the third virtual address is stored in the local cache, replace the data corresponding to the third virtual address in the local cache with the to-be-written data.

According to a third aspect, this application provides a computer storage medium. The computer storage medium stores instructions. When the instructions are run on a computer, the computer is enabled to perform the method according to the first aspect.

According to a fourth aspect, this application provides a computer program product including instructions. When the instructions are run on a computer, the computer is enabled to perform the method according to the first aspect.

It may be understood that, for beneficial effects of the second aspect to the fourth aspect, reference may be made to related descriptions in the first aspect. Details are not described herein again.

### BRIEF DESCRIPTION OF DRAWINGS

FIG. 1 is a diagram of mmap-based data access according to an embodiment of this application;
FIG. 2 is a diagram of an application scenario according to an embodiment of this application;
FIG. 3 is a schematic flowchart of a data access method according to an embodiment of this application;
FIG. 4 is a diagram of a process of accessing data in a distributed storage system according to an embodiment of this application;
FIG. 5 is a diagram of another process of accessing data in a distributed storage system according to an embodiment of this application;
FIG. 6 is a diagram of another process of accessing data in a distributed storage system according to an embodiment of this application;
FIG. 7 is a diagram of comparison between a conventional file access path and a global mmap access path according to an embodiment of this application;
FIG. 8 is a diagram of a structure of a data processing apparatus according to an embodiment of this application; and
FIG. 9 is a diagram of a structure of a computing device according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, any embodiment or design scheme described as an "example", "for example", or "in an example" should not be understood as being more preferred or having more advantages than another embodiment or design scheme. Exactly, use of the terms such as "example", "for example", or "in an example" is intended to present related concepts in a specific manner.

In addition, the terms "first" and "second" are merely used for description, and shall not be understood as indicating or implying relative importance or implicitly including indicated technical features. Therefore, a feature limited by "first" or "second" may explicitly or implicitly include one or more features. The terms "comprise", "include", "have", and their variants all mean "include but not limited to", unless otherwise specifically emphasized in another manner.

Before introducing solutions in this application, key terms that need to be used in embodiments of this application are first explained.
1. mmap is a method for mapping a file to a memory. To be specific, a file or another object in a file disk is mapped to address space (user space) of a process of an application, to implement a one-to-one mapping relationship between a file disk address and a segment of a virtual address in virtual address space of the process. After this relationship is implemented, the process can perform read/write operations on a segment of a memory in a pointer manner, and a system automatically writes back a dirty page into a corresponding file disk. In other words, an operation on the file is completed without calling a system calling function such as read and write. In addition, modifications made by kernel space to an area can also be directly reflected to the user space, to implement file sharing between different processes.
2. Bypass means that two networks can be physically connected in a specific trigger state (power-off or breakdown) without passing through a system of a network security device. Therefore, after the bypass is enabled, and the network security device is faulty, networks connected to the device can be connected to each other. In this case, the network device does not handle encapsulated packets on the networks.
3. A global memory pool is one logical memory pool including a plurality of physically separated memory pools.

The following describes the technical solutions in this application.

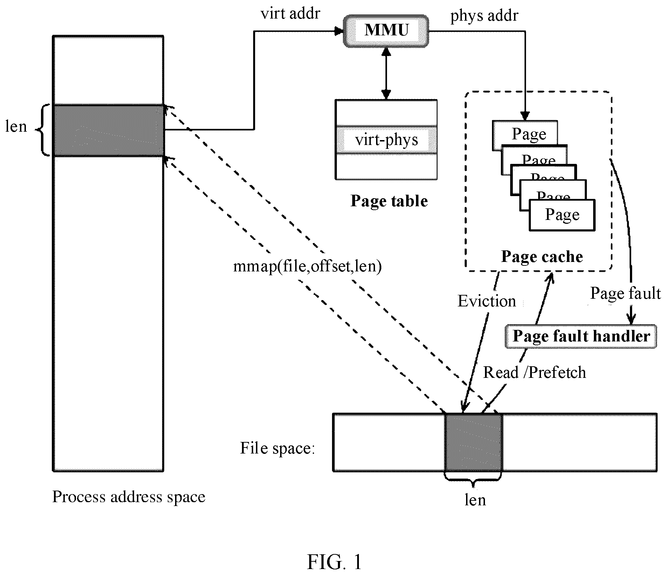

For example, FIG. 1 is a diagram of mmap-based data access. As shown in FIG. 1, an operating system on an electronic device allocates independent virtual address space to each process of an application. Then, a target process (which may be any process in the application) calls a library function mmap in user space, and searches a virtual address space of the target process for a segment of an idle consecutive virtual address that meets a requirement. Then, the found consecutive virtual address of the target process are associated with a file stored in file space (disk). When the mmap function is called, an identifier (file) of a mapped file, a start point (offset) of the mapped file in the file space (disk), and a length (len) of the mapped file need to be marked. After establishing a mapping relationship between the virtual address in the target process and the file in the user space, the operating system establishes a mapping relationship between a virtual address in a process and a physical address (a page in a page cache) in a memory of the electronic device via a memory management unit (Memory Management Unit, MMU), and stores the mapping relationship in a page table. The page in the page cache may be used for caching content of a file in the file space. It may be understood that each process has its own page table, and the page table stores a mapping relationship between a virtual address of the process and a physical address.

When a process of the application needs to read data in address space of the process, the process sends, to the MMU via a CPU of the electronic device, a virtual address of the data that needs to be read. After receiving the virtual address sent by the CPU, the MMU starts to query a page table of the process, to determine whether mapping exists in the page table of the process and whether read/write permissions of the process are normal. In a possible example, when there is no physical address, corresponding to the virtual address of the data that needs to be read, in the page table (that is, a local cache is not hit), the CPU generates a page fault (Page Fault). In this case, the process switches from a user mode to a kernel mode and sends the page fault to a page fault handler of a kernel for handling. Specifically, the CPU may read data from the file space through read/prefetch, and store the read data into the page in the page cache. Then, the CPU triggers the MMU to establish a mapping relationship between a virtual address of the data that needs to be read and the physical address in the page cache, and stores the mapping relationship in the page table. In another possible example, when there is a physical address, corresponding to the virtual address of the data that needs to be read, in the page cache (that is, a local cache is hit), the CPU may directly read the data in the page cache.

Generally, when file data needs to be modified during execution of a process of the application, modified file data is not synchronized to the disk (or the file space) immediately, and the modified data is cached in the page cache of the memory first. In this case, a page that is inconsistent with data of the disk may be referred to as a dirty page, and the dirty page is synchronized to the disk at proper time.

The mmap-based data access causes a plurality of processes to access a same file through the mmap, and only one accessed file is stored in the page cache, to reduce physical space occupation. In addition, the mmap-based data access can implement direct data exchange between the user space and kernel space, to eliminate a complex process due to different space and different data. However, the mmap is limited to implementing memory mapping for a file, an object, a block device, or the like in a single node, and does not have a cross-node mapping capability. In other words, based on a mmap data access manner shown in FIG. 1, global data access in a distributed storage system cannot be implemented.

In view of this, an embodiment of this application provides a data access method, and the method may be applied to a distributed storage system. Physical memories of storage nodes in the distributed storage system are used to form global address space, and a distributed physical address space (distributed physical address space, DPAS) is provided externally. A distributed physical address is mapped to a distributed virtual address (distributed virtual address, DVA) via a distributed page table (distributed page table, DPT). A global data block in the distributed storage system may be constructed based on the DVA. The global data block includes a user file or an object. Further, an application at a client (Client) in the distributed storage system may map the global data block to address space of a local process through distributed mmap, and access the global data block through load/store. In this way, the application of the client in the distributed storage system can access data in a distributed storage node more quickly.

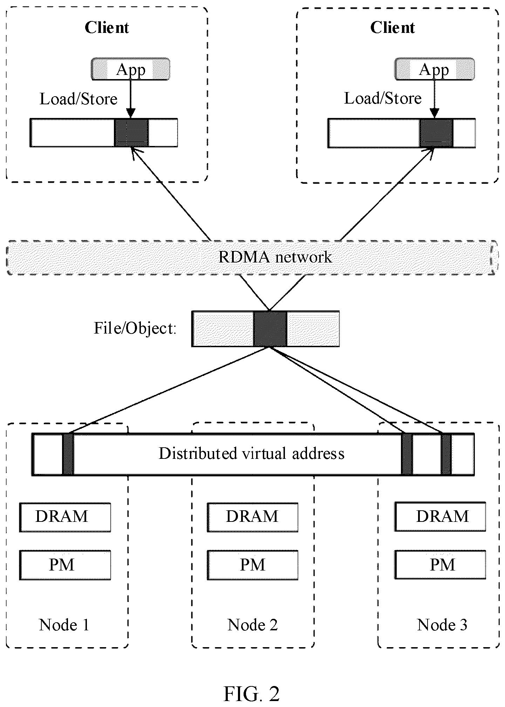

For example, FIG. 2 is a diagram of an application scenario according to an embodiment of this application. As shown in FIG. 2, a distributed storage system and a client are included. The distributed storage system includes a plurality of storage nodes (Nodes). The storage nodes may be configured to store data. In some possible examples, the storage node may include a physical storage medium such as a dynamic random access memory (dynamic random access memory, DRAM) or a PM. Physical storage media in the plurality of storage nodes form global address space of the distributed storage system, and provide distributed physical address space externally. A distributed physical address (distributed physical address, DPA) in the distributed physical address space may be mapped to a DVA via a DPT. A global data block in the distributed storage system may be constructed based on the DVA of the distributed storage system. The DPA may be for accessing data in the storage nodes and a CPU of a bypass storage node through a global memory bus.

An application is installed on the client. When the application runs, the application may map, by calling a distributedmmap function, data in the global data block that is constructed based on the DVA and that is in the distributed storage system to address space of a local process on the client, and perform, through load/store, a read/write operation on the data mapped to the address space of the local process.

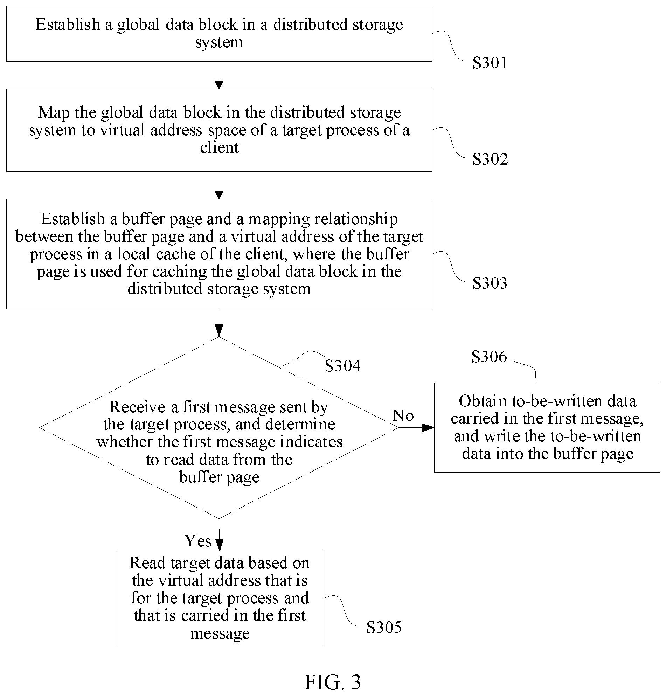

For example, an embodiment of this application provides a schematic flowchart of a data access method. The method may be applied to the distributed storage system shown in FIG. 2. Refer to FIG. 3. The method includes S301 to S306.

S301: Establish a global data block in a distributed storage system.

In this embodiment, for data stored in the distributed storage system, before accessing the data in the distributed storage system, management software in the distributed storage system may first construct the global data block in the distributed storage system.

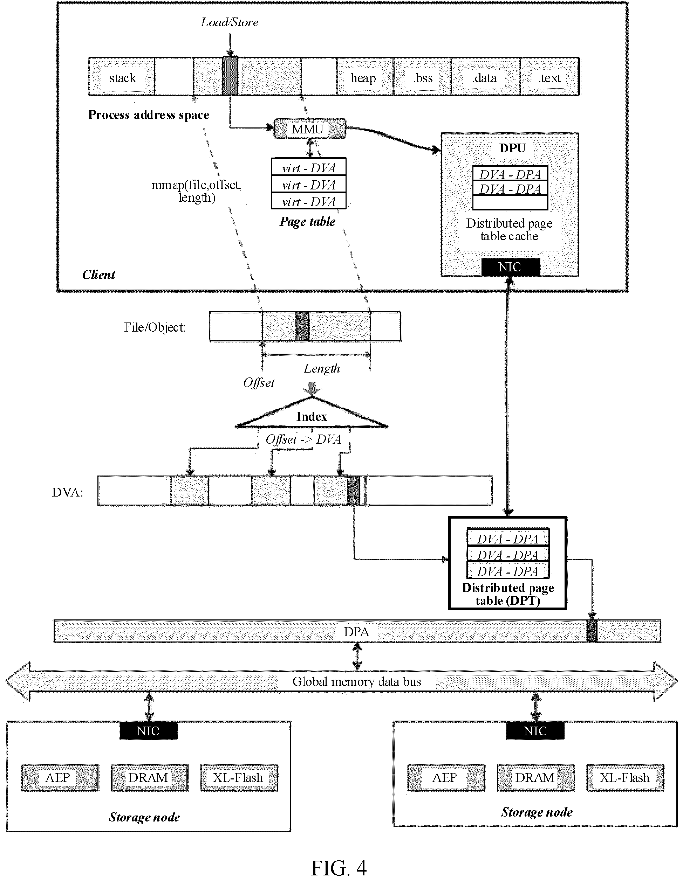

In a possible example, as shown in FIG. 4, storage media (for example, an AEP, a DRAM, and an XL-Flash) in each of a plurality of storage nodes (Storage nodes) in the distributed storage system form global address space of the distributed storage system, and provides distributed physical address space externally. The distributed physical address space of the distributed storage system may be accessed based on a DPA. In other words, after the DPA is obtained, data in the storage node may be directly accessed through a global memory data bus based on the obtained DPA.

After obtaining the DPA in the distributed storage system, the management software in the distributed storage system further needs to map the DPA in the distributed storage system to a DVA, so that users using the distributed storage system can share storage space of the entire distributed storage system. When the DPA in the distributed storage system is mapped to the DVA, a DPT needs to be generated in the distributed storage system. The DPT may be stored in any storage node of the distributed storage system, and the DPT is used for storing a mapping relationship between the DVA of the distributed storage system and the DPA.

After the DVA of the distributed storage system is obtained, the management software in the distributed storage system may construct the global data block in the distributed storage system based on the obtained DVA of the distributed storage system. In a possible example, the global data block in the distributed storage system may include a user file or an object.

S302: Map the global data block in the distributed storage system to virtual address space of a target process of a client.

In this embodiment, an operating system of the client allocates virtual address space with a fixed size to each process. The virtual address space of the process includes a plurality of virtual memory areas. The virtual memory area is a homogeneous interval in the virtual address space of the process, namely, a continuous address range having a same characteristic. In a possible example, as shown in FIG. 4, virtual address space of a process of a client in FIG. 4 includes a stack (stack), a file mapping area, a heap (heap), a bss data segment, an initial data segment, and a text data segment. The file mapping area is a spare part between the heap and the stack.

In a process of starting mapping, the target process may call a library function mmap in user space. A prototype of the library function mmap is:
void *mmap(viod * start, size_t length, intprot, int flags, intfd, off_t offset).

The parameter start represents a start address of a to-be-mapped memory. The parameter length represents an amount of a part that is of the global data block in the distributed storage system and that needs to be mapped to the memory. The parameter port represents a protection manner of a mapping area. The parameter flags represents various characteristics that affect the mapping area. The parameter fd represents a file descriptor of the global data block to be mapped to the memory. The parameter offset represents an offset during mapping of the global data block, and is usually set to 0, indicating that a mapped global data block corresponds from the front of the entire data block. The offset needs to be an integer multiple of a page size.

After the target process calls the library function mmap to map a global data block stored in a distributed storage node to the virtual address space of the target process, a CPU of the client further needs to store, into a local page table maintained by an MMU of the client, a mapping relationship, for example, a mapping relationship stored in a page table in FIG. 4, between the DVA of the global data block and a virtual address (virt) of the global data block in the virtual address space of the target process. In addition, the CPU of the client further needs to store, into mmap management software, the mapping relationship between the DVA of the global data block and the virtual address (virt) of the global data block in the virtual address space of the target process.

S303: Establish a buffer page and a mapping relationship between the buffer page and the virtual address in the target process in a local cache of the client, where the buffer page is used for caching the global data block in the distributed storage system.

In this embodiment, the CPU of the client may use a physical memory of the client as the local cache. After allocating the virtual address space to the process, the operating system of the client further needs to map a virtual address in the virtual space to the local cache of the client via the MMU. The virtual address may be mapped to the local cache via a page table, and the page table is maintained by the operating system of the client and referenced by a processor.

In a possible example, the virtual address space of the process may be divided based on a fixed size, and the local cache may also be set to different page sizes. However, generally, a size of the buffer page in the local cache is the same as a size of a virtual page.

After the local buffer page is established in the client, the target process of the client may trigger the CPU to read data stored in the distributed storage node to the local buffer page of the client. Specifically, after the CPU of the client obtains a virtual address of to-be-read data in the target process, the CPU of the client may search the local page table based on the virtual address of the to-be-read data in the target process to obtain a DVA of the to-be-read data in the distributed storage system, and then the CPU of the client sends a data read request command to the distributed storage system. The command carries the DVA of the to-be-read data. After obtaining the DVA, a CPU in the distributed storage system searches the DPT in the distributed storage system based on the DVA, to obtain the DPA of the to-be-read data. Then, the CPU in the distributed storage system obtains the to-be-read data based on the DPT, and sends the to-be-read data to the CPU of the client. After receiving the to-be-read data, the CPU of the client stores the to-be-read data into the local buffer page. Then, the CPU of the client further needs to establish a mapping relationship between the buffer page and the virtual address of the to-be-read data in the process, and replace, with the mapping relationship, a mapping relationship that is between the virtual address of the to-be-read data in the process and the DVA of the to-be-read data and that is in the local page table.

In a possible example, a data processing apparatus (data processing unit, DPU) may be deployed on the client. The DPU may pre-cache a part of the DPT in the distributed storage system. When the CPU needs to read the global data block in the distributed storage system to the local buffer page, the CPU may obtain, based on the local page table maintained by the MMU, the DVA of the global data block that needs to be read to the local buffer page, namely, a target DVA. Then, the CPU sends the target DVA to the DPU. The DPU obtains, from the distributed storage system based on the received target DVA, data corresponding to the target DVA. It may be understood that the DPU may be a PCIE device inserted into the client. The DPU may have its own operating system, CPU, storage medium, network interface, and the like.

In a possible example, the DPU pre-caches the part of the DPT maintained by the distributed storage system. After the DPU receives the target DVA, the DPU may search the DPT cached in the DPU for a DPA corresponding to the target DVA. If the DPU can find, in the DPT cached in the DPU, the DPA corresponding to the target DVA, the DPU may directly read, from the storage node of the distributed storage system based on the DPA, data stored in the DPA, and send the data to the CPU of the client. If the DPA corresponding to the target DVA does not exist in the DPT cached in the DPU, the DPU needs to obtain, from the DPT maintained by the distributed storage system, the DPA corresponding to the target DVA. After the DUP obtains, from the DPT maintained by the distributed storage system, the DPA corresponding to the target DVA, the DPU may first store a correspondence between the target DVA and the DPA into the DPT cached in the DPU. Then, the DPU may read, from the storage node in the distributed storage system based on the obtained DPA corresponding to the target DVA, data stored in the DPA, and send the data to the CPU of the client. After the CPU of the client receives the data that is sent by the DPU and that corresponds to the target DVA, the CPU caches the data into a buffer page of a local cache of a client side, and triggers the MMU to update the local page table. That the MMU updates the local page table means that a mapping relationship that is between the target DVA and a target virtual address of the target process and that is stored in the local page table is updated to a mapping relationship between the target virtual address and a physical address in a local memory.

In this embodiment, the page table is also referred to as a mapping table. If the operating system wants to map the virtual address in the target process to the physical address in the memory, a most intuitive method is to create a mapping table. The mapping table can implement mapping between a page in the virtual address in the target process and a page in a physical memory.

S304: Receive a first message sent by the target process, perform S305 when the first message indicates to read data from the buffer page, or perform S306 when the first message indicates to write data into the buffer page.

In this embodiment, when the target process needs to read a specific segment of data in the virtual address space of the target process in a running procedure, the target process initiates a read request to the CPU. The read request carries a virtual address of a target data block that needs to be read. When the target process needs to modify a specific segment of data in the virtual address space of the target process in the running procedure, the target process initiates a write request to the CPU. The write request carries a virtual address of a target data block that needs to be modified.

S305: Read the target data based on the virtual address that is for the target process and that is carried in the first message.

In this embodiment, when the first message sent by the target process indicates to read data from the buffer page, the CPU needs to send, to the MMU, the virtual address that is carried in the first message and that is of the target data that needs to be read. After the MMU receives the virtual address of the target data block, the MMU needs to determine whether a physical address that is in the local cache and that corresponds to the virtual address of the target data is stored in the local page table. When the MMU determines that the physical address that is in the local cache and that corresponds to the virtual address of the target data is stored in the local page table, the MMU may trigger the CPU to directly read the target data from the local cache based on the physical address corresponding to the virtual address of the target data. When the MMU determines that the physical address that is in the local cache and that corresponds to the virtual address of the target data block does not exist in the local page table, the MMU triggers the CPU of the client to generate a page fault, namely, a page fault. In response to the page fault, the CPU obtains the target data block from the storage node in the distributed storage system, and caches the target data block into the local buffer page.

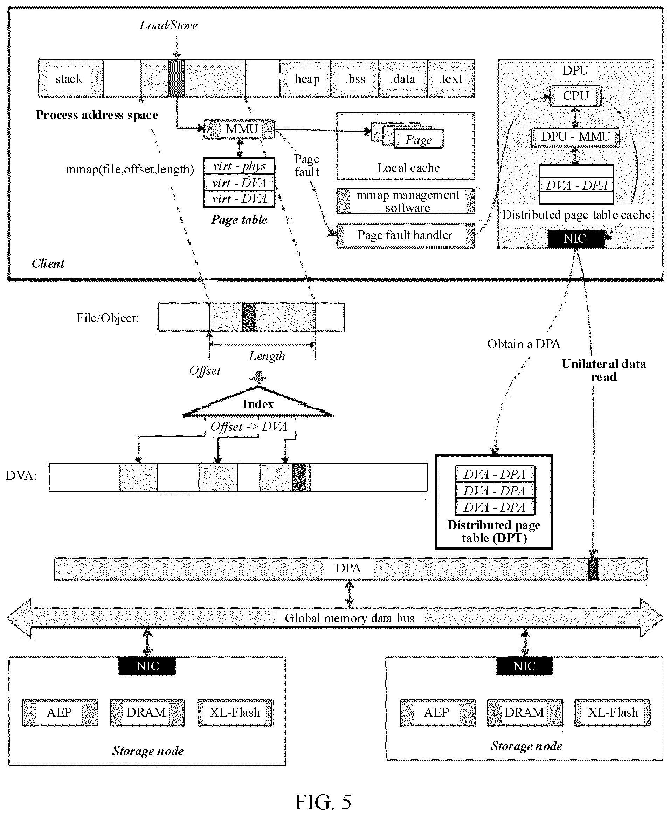

In a possible example, as shown in FIG. 5, at the client, a memory of the client is used as the local cache, to cache the global data block in the distributed storage system. The client further includes a CPU and a DPU of the client. After the page fault is generated in a running procedure of a target program, the target process switches from a user mode to a kernel mode, and sends the page fault to a kernel terminal processor (Page Fault Handler) in a kernel for handling. In a process in which the page fault handler handles the page fault, the DPU may accelerate the page fault.

Refer to FIG. 5. When the MMU determines that the physical address that is in the local cache and that corresponds to the virtual address of the target data block does not exist in the local page table, the MMU triggers the CPU to generate the page fault. In response to the page fault, the page fault handler in the CPU on the client side obtains, from the local page table, a DVA corresponding to the virtual address of the target data block, namely, the target DVA. Then, the page fault handler sends the obtained target DVA to the DPU. After the page fault handler on the client side sends the target DVA to the DPU, the operating system of the client needs to switch context to release the CPU. Then, the DPU performs subsequent page fault handling. It may be understood that, in this embodiment, "the virtual address of the target data block" is a virtual address of the target data block in the virtual address space of the target process.

After the DPU receives the target DVA sent by the page fault handler, a CPU in the DPU may search, via a memory management unit in the DPU (DPU-MMU), the DPT cached in the DPU for the DPA corresponding to the target DVA. When the CPU in the DPU determines that the DPA corresponding to the target DVA exists in the DPT cached in the DPU, the CPU in the DPU may directly read data at the DPA from the distributed storage node via a network interface controller (network interface controller, NIC) of the DPU. When the CPU in the DPU determines that the DPA corresponding to the target DVA does not exist in the DPT cached in the DPU, the CPU in the DPU needs to obtain, from the DPT on the distributed storage node via the NIC of the DPU, the DPA corresponding to the target DVA. After the CPU in the DPU obtains the DPA corresponding to the target DVA, the CPU in the DPU needs to trigger the DPU-MMU to add a mapping relationship between the target DVA and the DPA to the DPT cached in the DPU. In addition, after the CPU in the DPU obtains the DPA corresponding to the target DVA, the DPU may read data at the DPA from the distributed storage node via the NIC of the DPU.

After obtaining data corresponding to the target DVA, the DPU sends the data to the page fault handler. The page fault handler stores the data corresponding to the target DVA to the buffer page in the local cache of the client. Then, the page fault handler needs to establish a mapping relationship between the buffer page and the virtual address in the target process corresponding to the target DVA. In this case, the page fault handler completes handling of the page fault generated by the client. The target process may normally read data in the local cache of the client.

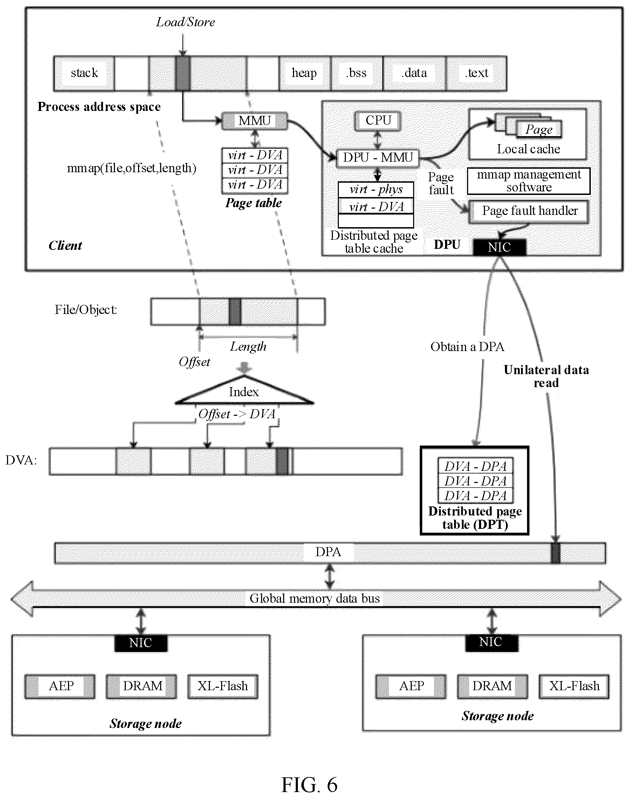

In a possible example, as shown in FIG. 6, at the client, a CPU of the client may generate a page fault. However, a DPU process handles the page fault generated by the CPU of the client. In this case, a memory of a DPU may be used as a page cache (namely, the local buffer page), to cache the global data block in the distributed storage system.

Refer to FIG. 6. After the CPU on the client side obtains the virtual address of the data that needs to be read by the target process, the CPU on the client side obtains, from the local page table via the MMU, a DVA corresponding to the virtual address of the target data block, namely, the target DVA. Then, the MMU uses the obtained target address to directly access the DPU.

After a DPU-MMU in the DPU receives the target DVA sent by the MMU, the DPU-MMU queries the local buffer page in the DPU, performs address translation, and obtains a physical address (namely, a page address in the buffer page) corresponding to the target DVA. When a buffer page corresponding to the target DVA is in a local cache of the DPU, a CPU in the DPU may directly read data from the buffer page corresponding to the target DVA. When a buffer page corresponding to the target DVA is not in the local cache of the DPU, the DPU-MMU triggers the CPU in the DPU to generate a page fault. In response to the page fault, the CPU in the DPU or another hardware unit in the DPU needs to notify an operating system of the client to perform context switching to release a system CPU. Then, a page fault handler in the DPU may search, via the memory management unit in the DPU (DPU-MMU), a DPT cached in the DPU for a DPA corresponding to the target DVA. When the page fault handler in the DPU determines that the DPA corresponding to the target DVA exists in the DPT cached in the DPU, the page fault handler in the DPU may directly read data at the DPA from the distributed storage node via a NIC of the DPU. When the page fault handler in the DPU determines that the DPA corresponding to the target DVA does not exist in the DPT cached in the DPU, the page fault handler in the DPU needs to obtain, from the DPT on the distributed storage node via a NIC of the DPU, the DPA corresponding to the target DVA. After the page fault handler obtains the DPA corresponding to the target DVA, the page fault handler in the DPU needs to trigger the DPU-MMU to add a mapping relationship between the target DVA and the DPA to the DPT cached in the DPU. In addition, after the page fault handler in the DPU obtains the DPA corresponding to the target DVA, the page fault handler in the DPU may read data at the DPA from the distributed storage node via the NIC of the DPU.

After reading data corresponding to the target DVA, the page fault handler in the DPU further needs to write the data corresponding to the target DVA into the buffer page in the local cache in the DPU. Then, the DPU sends a message to the MMU, to trigger the MMU to establish a mapping relationship between the buffer page in the DPU and the virtual address in the target process corresponding to the target DVA. In this case, handling of the page fault generated in the DPU is completed. The target process may normally read data in the local cache in the GPU.

S306: Obtain the to-be-written data carried in the first message, and write the to-be-written data into the buffer page.

In this embodiment, writing the to-be-written data into the buffer page means overwriting, to be specific, newly written data needs to overwrite original data.

In a possible example, for the distributed storage system shown in FIG. 5, after the target process sends the write request to the CPU of the client, the CPU of the client obtains the virtual address of the to-be-written data. The virtual address is "a virtual address in the address space of the target processes". Then, the MMU determines, based on the virtual address of the to-be-written data, whether a physical address that is in the local cache and that corresponds to the virtual address of the data is stored in the local page table. When the MMU determines that the physical address that is in the local cache and that corresponds to the virtual address of the to-be-written data is stored in the local page table, the MMU may trigger the CPU of the client to write the to-be-written data into the buffer page of the local cache based on the physical address corresponding to the virtual address of the to-be-written data. When the MMU determines that the physical address that is in the local cache and that corresponds to the virtual address of the target data block does not exist in the local page table, the MMU triggers the CPU of the client to generate a page fault, namely, a page fault. In response to the page fault, the CPU in the DPU obtains the target data block from the storage node in the distributed storage system, and caches the target data block into the local buffer page. Then, the CPU of the client establishes a mapping relationship between the virtual address of the to-be-written data and the local cache, and writes the to-be-written data into the local buffer page based on the mapping relationship. For a process in which the CPU in the DPU obtains the target data block from the storage node in the distributed storage system in response to the page fault, and caches the target data block into the local buffer page, refer to the description of FIG. 5 in S306. Details are not described herein again.

After the CPU of the client writes the to-be-written data into the local cache of the client, the CPU of the client marks a buffer page to which the data is written as a dirty page (dirty page) and adds the dirty page to a dirty list. Then, the mmap management software of the client periodically writes the page in the dirty list back to the distributed storage node, so that data in the distributed storage node is consistent with data cached in the memory of the client. It may be understood that the mmap management software stores the mapping relationship between the DVA of the global data block and the virtual address (virt) of the global data block in the virtual address space of the target process. Therefore, when the mmap management software writes the page in the dirty list back to the distributed storage node, the mmap management software may obtain, based on the local page table, the virtual address that is in the target process and that corresponds to the page in the dirty list. Then, the mmap management software may write, based on the virtual address that is in the target process and corresponds to the page in the dirty list and the mapping relationship stored in the mmap management software, the data stored in the page in the dirty list back to the storage node in the distributed storage system.

In a possible example, the mmap management software of the client obtains the dirty page in the local cache, and calls mcommit() to initiate a procedure of synchronizing the dirty page to the storage node in the distributed storage system. After the dirty page is synchronized to the storage node in the distributed storage system, the mcommit() returns success.

In another possible example, the mmap management software of the client obtains the dirty page in the local cache, and writes the dirty page back to the storage node in the distributed storage system by calling a refresh change function msync().

In a possible example, for the distributed storage system shown in FIG. 6, after the target process sends the write request to the CPU of the client, the CPU of the client needs to send the write request to the DPU. The DPU-MMU in the DPU determines, based on the virtual address of the to-be-written data, whether a physical address that is in the local cache and that corresponds to the virtual address of the data is stored in the local page table. The virtual address of the to-be-written data is "a virtual address in the address space of the target processes". If the DPU-MMU determines that the page table in the DPU stores the physical address that is in the local cache of the DPU and that corresponds to the virtual address of the to-be-written data, the MMU may trigger the CPU in the DPU to write the to-be-written data into the buffer page in the local cache of the DPU based on the physical address corresponding to the virtual address of the to-be-written data. If the DPU-MMU determines that the physical address that is in the local cache of the DPU and that corresponds to the virtual address of the to-be-written data is not stored in the page table in the DPU, the DPU-MMU triggers the CPU in the DPU to generate a page fault. In response to the page fault, the page fault handler in the DPU obtains the target data block from the storage node in the distributed storage system, and caches the target data block into the buffer page of the DPU. Then, the CPU in the DPU establishes a mapping relationship between the virtual address of the to-be-written data and the buffer page in the local cache in the DPU, and writes the to-be-written data into the local buffer page based on the mapping relationship. For a process in which the page fault handler in the DPU obtains the target data block from the storage node in the distributed storage system in response to the page fault, and caches the target data block into the local buffer page of the DPU, refer to the description of FIG. 6 in S306. Details are not described herein again.

After the CPU in the DPU writes the data that needs to be written by the target process into the buffer page in the local cache of the DPU, the CPU in the DPU marks the buffer page to which the data is written as a dirty page (dirty page) and adds the dirty page to a dirty list. Then, the mmap management software in the GPU periodically writes the page in the dirty list back to the distributed storage node, so that data in the distributed storage node is consistent with data cached in the memory of the client. In a possible example, the mmap management software in the DPU obtains the dirty page in the local cache, and calls mcommit() to initiate a procedure of synchronizing the dirty page to the storage node in the distributed storage system. After the dirty page is synchronized to the storage node in the distributed storage system, the mcommit() returns success. In another possible example, the mmap management software in the DPU obtains the dirty page in the local cache, and writes the dirty page back to the storage node in the distributed storage system by calling a refresh change function msync().

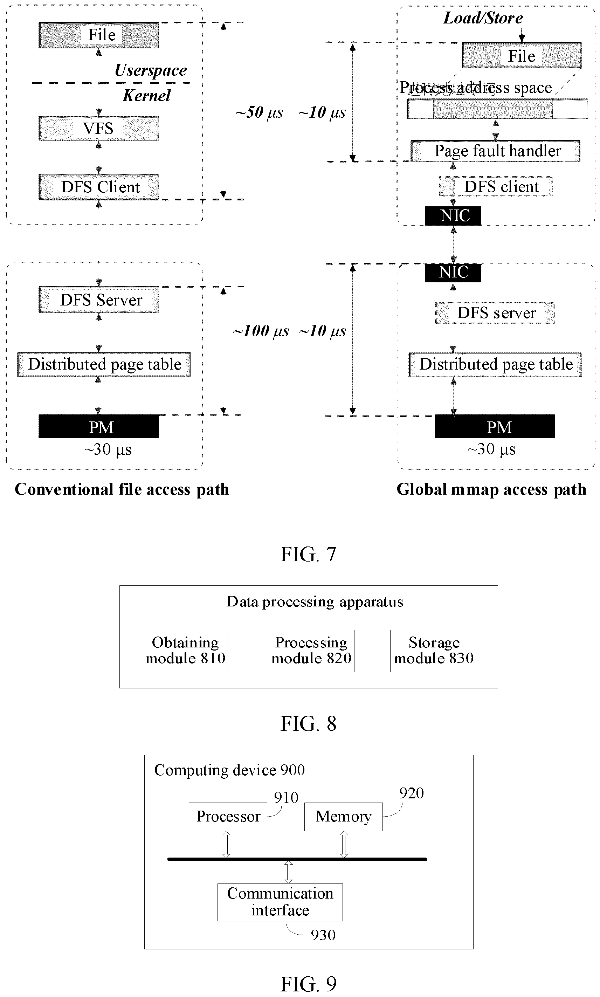

For the method in the foregoing embodiment, an embodiment of this application further provides a diagram of comparison between a conventional file access path and a global mmap access path. Refer to FIG. 7. It may be learned that the conventional file access path is long, and needs to pass through a VFS, a file system client, and a file system server, to finally access a PM, so that software stack overheads are high. However, in embodiments of this application, in a distributed storage system, after a remote file is mapped by using distributed mmap, a DVA (which may be recorded in a process page table) of the file is recorded locally (at a client), and when a local cache is not hit, remote DVA space is accessed based on a page fault. A NIC directly accesses a PM medium, so that software stack overheads of a bypass server are reduced, and a delay of an end-to-end software stack is reduced from 150 µs to 20 µs.

In embodiments of this application, for the distributed storage system, a global shared memory pool in the distributed storage system is constructed. Then, a global data block is constructed based on the global memory pool, and the global data block is mapped to process address space of the client. Then, the client establishes the local cache configured to cache the global data block in the distributed system, and establishes mapping from a virtual address of a process to a buffer page based on a local page table of the client. In the distributed storage system, mmap mapping is performed on a file stored in a storage node, so that an application of the client can directly access data in the storage node through load/store. The global data block based on the global memory pool is constructed in the distributed storage system, so that a plurality of clients belonging to the same distributed storage system may perform mmap on the same global data block, and shared access of the global data block is implemented between the clients. In addition, in the distributed storage system, after the remote file is mapped by using the distributed mmap, the DVA of the file is recorded locally (which may be recorded in the process page table). When the local cache is not hit, the remote DVA space is accessed based on the page fault, so that delay overheads of an end-to-end software stack are reduced.

For example, an embodiment of this application further provides a data processing apparatus. FIG. 8 is a diagram of a structure of a data processing apparatus according to an embodiment of this application. As shown in FIG. 8, the data processing apparatus includes an obtaining module 810, a processing module 820, and a storage module 830.

The storage module 830 is configured to store a part of data needed in a running procedure of a target process, and the storage module 830 further stores a local page table, which may also be referred to as a first address mapping relationship table. The local page table stores a mapping relationship between a DVA of a global data block in a distributed storage system and a virtual address in a target process, and a mapping relationship between the virtual address in the target process and a physical address of a local cache in the data processing apparatus.

The obtaining module 810 is configured to obtain, during the target process, a virtual address of target data in the target process, which may also be referred to as a first virtual address.

The processing module 820 is configured to query a local page table based on the obtained virtual address of the target data, to determine whether a physical address of a local cache corresponding to the virtual address of the target data is stored in the local page table. When the processing module 820 determines that the physical address of the local cache corresponding to the virtual address of the target data is stored in the local page table, the processing module 820 obtains the physical address.

The obtaining module 810 obtains the target data from the local cache based on the physical address obtained by the processing module 820.

In a possible example, when the processing module 820 determines that the physical address of the local cache corresponding to the virtual address of the target data is stored in the local page table, the processing module 820 queries the local page table based on the virtual address of the target data, to obtain a DVA of the target data. Then, the processing module 810 determines a DPA of the target data based on the DVA of the target data. The obtaining module obtains the target data from the distributed storage system based on the DPA of the target data obtained by the processing module.

In the data processing apparatus, for a specific process of accessing the target data needed by the target process, refer to S302 to S306. Details are not described herein again.

For example, an embodiment of this application further provides a computing device. The computing device includes at least a processor and a memory. The memory stores a program. When the processor runs the program, units or modules in the steps in the method shown in FIG. 3 may be implemented.

FIG. 9 is a diagram of a structure of a computing device according to an embodiment of this application. As shown in FIG. 9, the computing device 900 includes at least one processor 910, a memory 920, and a communication interface 930. The processor 910, the memory 920, and the communication interface 930 are communicatively connected to each other in a wired (for example, a bus) manner, or may be communicatively connected to each other in a wireless manner. The communication interface 930 is configured to receive data (for example, an IR corresponding to a DUT) sent by another device. The memory 920 stores computer instructions, and the processor 910 executes the computer instructions to perform the method in the foregoing method embodiments.

It should be understood that, in this embodiment of this application, the processor 910 may be a central processing unit CPU, or the processor 910 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor or any conventional processor or the like.

The memory 920 may include a read-only memory and a random access memory, and provides instructions and data to the processor 910. The memory 920 may further include a non-volatile random access memory.

The memory 920 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that the computing device 900 according to this embodiment of this application may implement the method shown in FIG. 3 in this embodiment of this application. For detailed descriptions of implementation of the method, refer to the foregoing descriptions. For brevity, details are not described herein again.

An embodiment of this application provides a computer-readable storage medium. The computer-readable storage medium stores a computer program. When the computer instructions are executed by a processor, the foregoing method is implemented.

An embodiment of this application provides a chip. The chip includes at least one processor and an interface. The at least one processor determines program instructions or data through the interface. The at least one processor is configured to execute the program instructions to implement the foregoing method.

An embodiment of this application provides a computer program or a computer program product. The computer program or the computer program product includes instructions. When the instructions are executed, a computer is enabled to perform the foregoing method.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

It may be understood that various numbers in embodiments of this application are merely used for differentiation for ease of description, and are not used to limit the scope of embodiments of this application.

## Claims

1. A data access method, wherein the method comprises:
obtaining, in a running procedure of a target process, a first virtual address of target data in the target process;
querying a first address mapping relationship table based on the first virtual address, to determine whether the target data is stored in a local cache, wherein the first address mapping relationship table comprises a correspondence between a virtual address of data in a first data set in a process and a physical address of the data in the first data set in the local cache, and the data in the first data set is obtained from a distributed storage system in advance;
if the target data is stored in the local cache, querying the first address mapping relationship table based on the first virtual address, to obtain a physical address of the target data in the local cache; and
obtaining the target data based on the physical address of the target data in the local cache.

2. The method according to claim 1, wherein the first address mapping relationship table further comprises a correspondence between a virtual address of data in a second data set in the process and a virtual address of the data in the second data set in the distributed storage system, and the method further comprises:
if the target data is not stored in the local cache, querying the first address mapping relationship table based on the first virtual address, to obtain a second virtual address of the target data in the distributed storage system;
querying a second address mapping relationship table based on the second virtual address, to obtain a physical address of the target data in the distributed storage system, wherein the second address mapping relationship table comprises a correspondence between a virtual address of data in a third data set stored in the distributed storage system and a physical address of the data in the third data set in the distributed storage system, and the data in the third data set comprises the data in the first data set and the data in the second data set; and
obtaining the target data from the distributed storage system based on the physical address of the target data in the distributed storage system.

3. The method according to claim 2, wherein after the obtaining the target data from the distributed storage system based on the physical address of the target data in the distributed storage system, the method further comprises:
storing the target data in the local cache;
establishing a first correspondence between the first virtual address of the target data in the target process and the physical address of the target data in the local cache; and
replacing a second correspondence in the first address mapping relationship table with the first correspondence, wherein the second correspondence is a correspondence between a virtual address of the target data in the target process and a virtual address of the target data in the distributed storage system.

4. The method according to claim 1, wherein the method further comprises:
obtaining, in the running procedure of the target process, a third virtual address of to-be-written data in the target process;
querying the first address mapping relationship table based on the third virtual address, to determine whether data corresponding to the third virtual address is stored in the local cache; and
if the data corresponding to the third virtual address is stored in the local cache, replacing the data corresponding to the third virtual address in the local cache with the to-be-written data.

5. A data processing apparatus, comprising:
an obtaining module, configured to obtain, in a running procedure of a target process, a first virtual address of target data in the target process; and
a processing module, configured to: query a first address mapping relationship table based on the first virtual address, to determine whether the target data is stored in a local cache, wherein the first address mapping relationship table comprises a correspondence between a virtual address of data in a first data set in a process and a physical address of the data in the first data set in the local cache, and the data in the first data set is obtained from a distributed storage system in advance; and if the target data is stored in the local cache, query the first address mapping relationship table based on the first virtual address, to obtain a physical address of the target data in the local cache, wherein
the obtaining module is further configured to obtain the target data based on the physical address of the target data in the local cache.

6. The apparatus according to claim 5, wherein the first address mapping relationship table further comprises a correspondence between a virtual address of data in a second data set in the process and a virtual address of the data in the second data set in the distributed storage system, and the processing module is further configured to:
if the target data is not stored in the local cache, query the first address mapping relationship table based on the first virtual address, to obtain a second virtual address of the target data in the distributed storage system; and query a second address mapping relationship table based on the second virtual address, to obtain a physical address of the target data in the distributed storage system, wherein the second address mapping relationship table comprises a correspondence between a virtual address of data in a third data set stored in the distributed storage system and a physical address of the data in the third data set in the distributed storage system, and the data in the third data set comprises the data in the first data set and the data in the second data set; and
the obtaining module is further configured to obtain the target data from the distributed storage system based on the physical address of the target data in the distributed storage system.

7. The apparatus according to claim 6, wherein the processing module is further configured to:
store the target data in the local cache;
establish a first correspondence between the first virtual address of the target data in the target process and the physical address of the target data in the local cache; and
replace a second correspondence in the first address mapping relationship table with the first correspondence, wherein the second correspondence is a correspondence between a virtual address of the target data in the target process and a virtual address of the target data in the distributed storage system.

8. The apparatus according to claim 5, wherein the obtaining module is further configured to obtain, in the running procedure of the target process, a third virtual address of to-be-written data in the target process; and
the processing module is further configured to query the first address mapping relationship table based on the third virtual address, to determine whether data corresponding to the third virtual address is stored in the local cache; and if the data corresponding to the third virtual address is stored in the local cache, replace the data corresponding to the third virtual address in the local cache with the to-be-written data.

9. A computer-readable medium, wherein the computer storage medium stores instructions; and when the instructions are run on a computer, the computer is enabled to perform the method according to any one of claims 1 to 4.

10. A computer program product comprising instructions, wherein when the instructions are run on a computer, the computer is enabled to perform the method according to any one of claims 1 to 4.
